# EUROPEAN PATENT SPECIFICATION

(11) **EP 1 969 267 B1**
(45) Date of publication and mention of the grant of the patent: **06.01.2010**
(21) Application number: 06837515.3
(22) Date of filing: 14.11.2006
(51) Int. Cl.: F16K 27/00

(54) **FLUID VALVE BODIES AND IMPROVED METHODS OF MANUFACTURE**
STRÖMUNGSVENTILKÖRPER UND VERBESSERTE HERSTELLUNGSVERFAHREN
CORPS DE SOUPAPE POUR FLUIDE ET PROCEDES DE FABRICATION PERFECTIONNES

(30) Priority: 15.12.2005 US 304012
(43) Date of publication of application: 17.09.2008
(73) Proprietor: FISHER CONTROLS INTERNATIONAL LLC, St. Louis, MO 63136 (US)
(72) Inventor: DURANT, Tony, Alan, Mckinney, TX 75071 (US); LARSEN, Samuel, Harold, Powlett, TX 75088 (US)
(74) Representative: Bohnenberger, Johannes
(86) International application number: PCT/US2006/044112
(87) International publication number: WO 2007/070212

(56) References cited:
- DE-A1- 3 323 712
- DE-A1- 3 327 406
- US-B1- 6 390 447

## Description

### FIELD OF THE DISCLOSURE

This disclosure relates generally to fluid valve bodies and, more particularly, to fluid valve bodies and methods of manufacture to lower the cost thereof.

A valve and a method of manufacturing its body have been disclosed for example in document DE 3323712.

### BACKGROUND

Typically, it is necessary to control process fluids in industrial processes, such as oil and gas pipeline distribution systems, chemical processing plants, and sanitary processes such as, for example, food and beverage processes, pharmaceutical processes, cosmetics production processes, etc. Generally, process conditions, such as pressure, temperature, and process fluid characteristics dictate the type of valves and valve components that may be used to implement a fluid control system. Valves typically have a fluid passageway, including an inlet and an outlet, which passes through the valve body.

Various types of structures can be used to make fluid valve bodies, such as castings, forgings or machined solid materials. Typically, the fluid control process determines the types of materials and structures that are suitable for valve bodies used in the process. For processes that require sanitary conditions, such as providing clean steam, water for injection, or food and beverage services, castings may not be useable because the porosity of a casting may harbor microorganisms and other contaminants within the valve along the path of fluid flow. Forgings can be utilized for making fluid valve bodies to be used in sanitary fluid control systems, but typically are not economically feasible for producing low quantities of such valve bodies. A solid body or object, such as metal bar stock, may be used to manufacture a valve body for use in a sanitary fluid control system. However, a large amount of material is wasted during machining because the solid object must have an initial size large enough to accommodate the largest outer dimension or diameter of the valve body, and final wall thicknesses may be small in relation to initial wall thicknesses. Thus, substantial machining time is spent removing the excess outer thickness of material relative to the time spent machining the internal surfaces of the valve body.

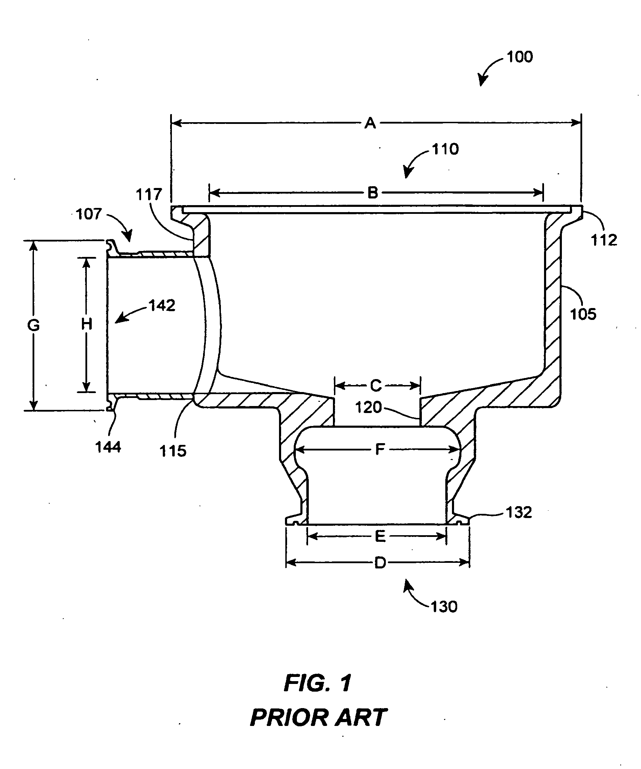

FIG. 1 is a cross-sectional view of an example of a known valve body manufactured for use in a sanitary fluid control process. The valve body 100 has been machined from two solid objects (e.g., metal bar stock) to provide valve body pieces 105 and 107. A first end 110 of the piece 105 has been machined to form a flange 112 for connection to another part (e.g., a pipe) of a process fluid control system. The flange 112 has an outer diameter A, which is achieved by machining an initially larger outer diameter of the solid object from which the body 100 is formed. The first end 110 has an inner diameter B, which requires that a large amount of the material of the solid object be machined away or removed. Similarly, a port 120 of the valve body 100 requires the removal of a substantial amount of material to enable the port 120, having a diameter C, to meet the required fluid flow characteristics of the valve body 100. A second end 130 of the piece 105 has been machined to include a flange 132 having an outer diameter D, an inner diameter E, and an enlarged area having a diameter F adjacent the port 120. Again, considerable material of the solid object used to form the piece 105 must be machined away (i.e., turned into scrap material) to form the inner diameters E and F.

A separate solid object (e.g., a piece of bar stock) has been used to provide the lateral or side piece 107, which has an open end 142. The end 142 of the side piece 107 has been machined to include a flange 144 having an outer diameter G and an inner diameter H extending laterally to the inner diameter B of the end 110. Again, considerable material of the solid object used to form the valve body piece 107 must be machined away to form the outer diameter G and the inner diameter H of the end 142. After the side piece 107 has been machined, it is permanently coupled or joined via a weld 115 to the piece 105 at a side portion 117 of the valve body 100 using any one or combination of known techniques, such as gas tungsten arc welding, shielded metal arc welding, submerged arc welding, flux cored arc welding, gas metal arc welding, electro-gas arc welding, plasma arc welding, and/or atomic hydrogen welding.

As can be seen readily from the known valve body 100, the initial dimensions or diameters of the solid objects used to form the pieces 105 and 107 have to be large enough so that the diameters and contours of the pieces 105 and 107 can be formed, resulting in a considerable amount of machining time, a large amount of material scrap, and corresponding increased labor costs, all of which contribute to make the valve body 100 relatively expensive to manufacture.

### SUMMARY OF THE DISCLOSURE

In accordance with one example, a method of making a fluid valve body comprises the steps of independent claim 1.

In accordance with another example, a fluid valve body comprises the features of claim 8.

### BRIEF DESCRIPTION OF THE DRAWINGS

FIG. 1 is a cross-sectional view of a known fluid valve body.

FIG. 2 is a cross-sectional view of an example fluid valve body.

FIG. 3 is a cross-sectional view of an alternative example fluid valve body.

FIG. 4 is a representative flow diagram of an example process that may be used to manufacture the example fluid valve bodies disclosed herein.

### DETAILED DESCRIPTION

In general, the example fluid valve bodies described herein include valve bodies through which fluid may flow between ends of the valve bodies and through one or more fluid passages or ports of the valve bodies. Typically, known fluid valve bodies for sanitary fluid flow applications are manufactured from solid objects such as, for example, pieces of metal bar stock. Such pieces of bar stock must have initial outer dimensions or diameters of sufficient size to form the desired contours of the fluid valve body when machining of the pieces is complete. The machining process typically requires the removal of large amounts of metal, which becomes scrap in the manufacturing process. Additionally, substantial machining time is required in the manufacture of such a fluid valve body and results in significant labor cost or expense.

The use of a casting process to form a valve body can significantly reduce the amount of scrap material and manufacturing time. However, a casting is not suitable for use as a sanitary valve body because the porosity of the casting may result in the harboring of microorganisms or other contaminants. Further, while forgings can be used to manufacture fluid valve bodies for use in sanitary applications, forgings are relatively expensive and are not economically feasible for low volume production of fluid valve bodies.

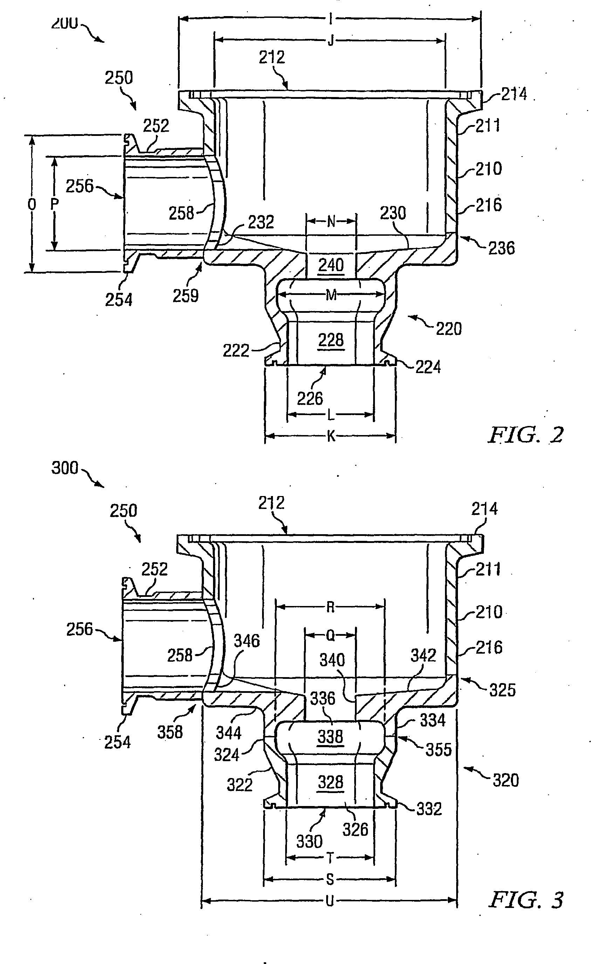

FIG. 2 is a cross-sectional view of an example fluid valve body 200. As shown in FIG. 2, the example valve body 200 includes a first piece or member 210 that has been machined from a selected and/or cut length of pipe. The first piece or member 210 has been machined to form an end 211 having an opening 212 and a flange 214 for coupling with another part of a fluid control system. The flange 214 has an outer diameter I and the opening 212 has an inner diameter J. As can be appreciated from FIG. 2, the use of a piece of pipe to form the first piece or member 210 requires less machining and, thus, less scrap material than machining a similar piece from a solid object or piece of metal bar stock (e.g., as is the case for the piece 105 of the known valve body 100 shown in FIG. 1).

An opposite or second end 216 of the first member or piece (e.g., piece of pipe) 210 is configured to couple to a second piece or member 220 of the example valve body 200. The second end 216 of the member 210 may be configured to the desired shape by any suitable machining (e.g., cutting) and/or drilling operation. The second member 220 has been machined from a solid object (e.g., piece of metal bar stock) and has an end 222 that includes a flange 224 having an outer diameter K. The end 222 includes an opening 226 having a diameter L, which extends to an enlarged area 228 having a diameter M. Another or second end 230 of the second member 220 is configured (e.g., machined) to engage or couple to the second end 216 of the first member (e.g., pipe) 210, and includes a contoured or cut-away portion 232 to engage or couple to a portion of the second end 216 of the first member (e.g., pipe) 210. Adjacent the second end 230 is a port 240 having a diameter N configured to control the flow of fluid through the port 240. The second end 216 of the piece or member 210 and the second end 230 of the second member 220 are coupled or joined together by any joining techniques that effect a permanent and leak-proof bond. When manufactured from metal objects, the example coupling or joining techniques may include gas tungsten arc welding, shielded metal arc welding, submerged arc welding, flux cored arc welding, gas metal arc welding, electro-gas arc welding, plasma arc welding, and atomic hydrogen welding. In the example valve body 200, a full penetration bond or weld 236 can be formed between the first member 210 and the second member 220.

Generally, an example fluid valve body may be manufactured from two or more pieces of material such as a pipe and bar stock material. In the example valve body 200 of FIG. 2, the body 200 includes a third piece or member 250 that may be formed by machining a solid object or metal bar stock material. The third member 250 includes an end 252 having a flange 254 with an outer diameter O and an inner diameter P. The end 252 includes an opening 256 having the diameter P. Alternatively, the third member 250 may be a preformed piece for which the end 252 is formed to a final configuration prior to the assembly of the third member 250 to the example fluid valve body 200. A second end 258 of the third member 250 is configured to engage at least one of the second ends 216 and 230 of the first member 210 and the second member 220, respectively. The third member 250 is coupled or joined to the valve body 200 by any of the coupling or joining techniques described above to achieve a permanent and leak-proof bond and, in this example, can be joined by a full penetration bond or weld 259. In the example valve body 200 illustrated in FIG. 2, the bond or weld 259 joins the third member 250 to both the first member 210 and the second member 220. However, depending on design requirements, the third member 250 can be joined to just one of first member 210 and the second member 220.

The example fluid valve body 200 of FIG. 2 is the result of a method of manufacturing that reduces the amount of machining time required to make a valve body. The first member 210 can be made from a piece of metal pipe that is pre-selected to have an appropriate length and inner and outer diameters that require less machining time as compared to the machining time required for a solid metal object or bar stock material. By utilizing a piece of pipe 210 to form the first member 210 of the valve body 200, a significant amount of machining time and a corresponding amount of scrap material and lost time are eliminated from the manufacturing process. The known fluid valve body 100 of FIG. 1 typically requires about four hours of machining time to make the pieces 105 and 107. In contrast, the machining time required to fabricate the first member 210, the second member 220, and the third member 250 of FIG. 2 is about two and a half hours. Further, the known valve body 100 of FIG. 1 is made from initial bar stock pieces weighing about one hundred pounds, and the illustrated finished valve body 100 weighs about twenty-five pounds, resulting in about seventy-five pounds of scrap material. In the example of FIG. 2, using a pipe pre-selected to have an appropriate length and inner and outer diameters to form the first member 210 results in less material cost because significantly less scrap material is generated during the manufacturing process. Although additional welding time is required to couple the first member 210 to the second member 220, the manufacture of the example valve body 200 can cost less to manufacture as compared to a valve body manufactured from solid metal objects such as bar stock. Generally, a low carbon stainless steel alloy, which has a high corrosion resistance, may be utilized in the manufacture of fluid valve bodies for sanitary fluid flow applications.

FIG. 3 is a cross-sectional view of an alternative example fluid valve body 300. As shown in FIG. 3, the example valve body 300 includes the previously illustrated first member 210, which is machined from an initial piece of metal pipe. In this example, the second end 216 of the first member or piece of pipe 210 is configured (e.g., via machining and/or drilling) to be coupled to a second member 320 of the valve body 300. The second member 320 includes a first part 322 and a second part 344 made from solid objects or pieces of metal bar stock machined to provide the contours of the parts 322 and 344. The first part 322 has an outer dimension or diameter S and the second part 344 has an outer dimension or diameter U. As can be readily seen in FIG. 3, the outer dimension S of the first part 322 is significantly smaller than the outer dimension U of the second part 344. By fabricating the first part 322 from a separate, smaller diameter solid object or piece, significant reductions can be achieved in the cost of the solid object, the amount of machining time required to form the second part 344, and the amount of material machined away, which becomes scrap in the manufacturing process.

The first part 322 includes a first end 324 configured by machining to engage or couple to a first end 334 of the second part 344. The first end 324 has an opening 326 that includes an enlarged area 328 having a diameter R A second open end 330 of the first part 322 is configured by machining to include a flange 332 having an outer diameter S and an inner diameter T. The first end 334 of the second part 344 includes an opening 336 having a diameter R to form part of an enlarged area 338. The opening 336 communicates fluidly with the correspondingly shaped opening 326 at the first end 324 of the first part 322. The second part 344 includes a second end 342 configured by machining to engage or couple to the second end 216 of the first member 210. The second part 344 includes a contoured or cut-away portion 346 configured to couple or engage a portion of the second end 216 of the first member 210. Adjacent the second end 342 of the second part 344 is a port 340 having a diameter Q for controlling the flow of fluid through the port 340. The first end 334 of second part 344 and the first end 324 of the first part 322 are coupled or joined together by any of the above-described example joining techniques to achieve a permanent and leak-proof bond, such as a weld 355.

The example valve body 300 also includes the previously illustrated third piece or member 250 formed by machining a solid object or metal bar stock material. The third member 250 includes the end 252 having a flange 254, an opening 256, and the second end 258 configured to engage or couple to at least one of the second end 216 of the first member 210 or the second end 342 of the second part 344. As illustrated in FIG. 3, the second end 258 engages both the second end 216 of the first member 210 and the second end 342 of the second part 344. The third member 250 is coupled or joined to the second ends 216 and 342 at the bond or weld 358 by any of the coupling or joining techniques described above to achieve a permanent and leak-proof bond.

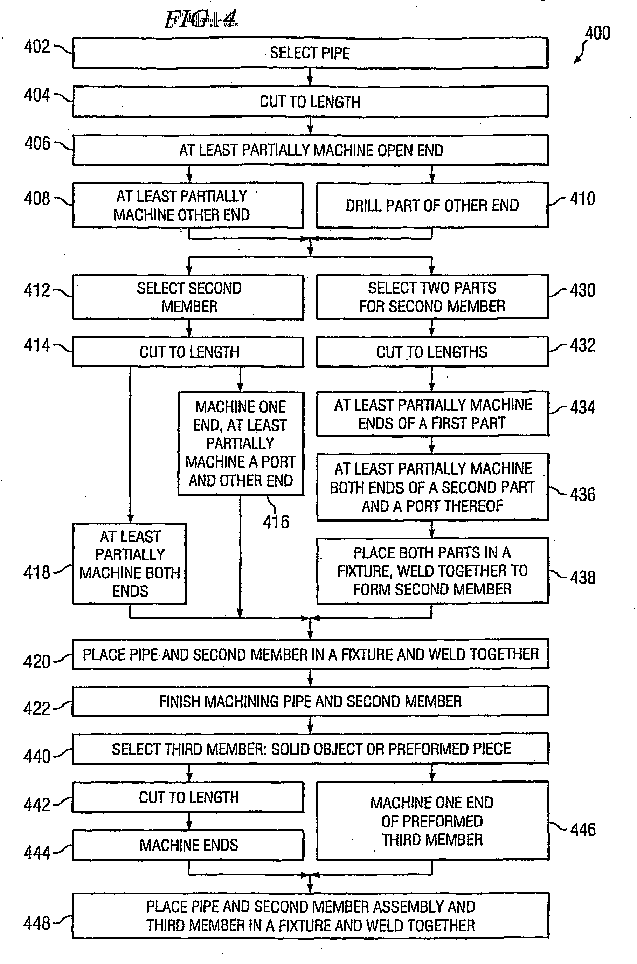

FIG. 4 is example flow chart representative of methods for manufacturing example fluid valve bodies. More particularly, FIG. 4 illustrates example manufacturing methods 400 that may be used to make the example valve bodies described herein. Initially, a pipe is selected (block 402) according to the desired inner and outer diameters (e.g., of the first member or piece 210) and then, if not pre-selected to a desired length, is cut to the desired length (block 404). As described in connection with the example valve bodies of FIGS. 2 and 3, the length of pipe is machined to form an end with an opening (e.g. the end 211 having the opening 212 of FIGS. 2 and 3). However, the end and opening may be only partially machined or rough cut (block 406) and the final machining may be completed later. By completing the final machining of the end and opening of the pipe at a later time in the manufacturing process, time and expense can be saved by not having fully machined a piece that, for a variety of reasons, might be scrapped later in the process. Generally, once the final assembly of an example valve body has been successfully completed, final machining of some of the parts of the valve body can be accomplished to decrease the possibility of scrapping parts that were previously fully machined. Thus, the methods 400 illustrated in FIG. 4 depict both rough cutting operations and final machining operations.

The other end or second end (e.g., the end 216 of FIGS. 2 and 3) of the pipe may optionally be machined (block 408), and in some applications the second end would be completely machined because this end will be joined or coupled to a second member (e.g., the second members 220 and 320 of FIGS. 2 and 3) of the completed valve body. Alternatively, the second end of the pipe may be drilled to form the desired contour (block 410).

Next, the second member of the example valve body may be manufactured by alternative methods as illustrated in FIG. 4. The material used to form the second member may be selected (block 412), and the material selected may be a solid object or a piece of bar stock made of metal, according to the desired application for the example valve body. The second member is cut to the desired length (block 414), and then machined to form the desired contours. The machining method can be, alternatively, a machining of one end (e.g., the ends 222 and 330 of FIGS. 2 and 3) of the second member and at least partial machining of a port (e.g., the ports 240 and 340 of FIGS. 2 and 3) and the other end (e.g., the ends 230 and 342 of FIGS. 2 and 3) of the second member (block 416), or a partial machining of both ends of the second member (block 418). After the desired machining of the second member has been accomplished, the pipe (e.g., the first member or the 210) and second member (e.g., the second members 220 and 320 of FIGS. 2 and 3) are placed in a holding device such as a fixture and coupled or joined together, for example, by welding as described above (block 420). The assembly may be final machined to achieve the desired finished contours (block 422). Depending on the extent of previous machining of the pipe and/or the second member, either one or both of the pipe and the second member may require final machining.

Blocks 430 - 438 illustrate an alternative method of manufacturing the second member of an example valve body. Two parts (e.g., the first and second parts 322 and 344 of FIG. 3) are selected (block 430) for forming the second member (e.g., second member 320 of FIG. 3). The structures selected for the two parts may be solid objects or pieces of bar stock made of metal. The two parts are cut to the desired lengths for the respective parts (block 432). The example methods of FIG. 4 and, in particular for the forming of a two-part second member, include at least the partial machining of the ends (e.g., the ends 324 and 330 of FIG. 3) of the first part of the second member (block 434). The second part of the two parts of the second member is at least partially machined or rough cut at both ends (e.g., the ends 334 and 342 of FIG. 3) and to form a port (e.g., the -port 340 of FIG. 3) as part of the second part (block 436). It should be clearly understood that the two pieces or parts of the second member can include a port in either one of the first and second parts or in both parts, and the description of a port in the second part is merely illustrative of the example manufacturing methods and designs described herein. The first and second parts are then placed in a holding device such as a fixture (block 438) and coupled or joined together, for example, by welding as described above, to form the second member. This alternative method of manufacture includes placing the pipe (e.g., the first member or piece 210) and second member (e.g., the second member 320 of FIG. 3) in a holding device such as a fixture so that the pipe and second member are coupled or joined together (block 420), for example, by welding as described above, and the assembly of the pipe and second member may then be final machined to achieve the desired finished contours (block 422). Depending on the extent of previous machining of the pipe and/or second member, either one or both of the pipe and second member may require final machining.

As previously disclosed, an example valve body may include a first member or piece made from pipe, and a second member, and a third member (e.g., the third member 250 of FIGS. 2 and 3) as illustrated in FIGS. 2 and 3. If a third member is needed, a structure (e.g., a solid object or a piece of bar stock made of metal) from which the third member is to be fabricated is selected (block 440). The third member can be cut to the desired length (block 442), and the ends (e.g., the ends 252 and 258 of FIGS. 2 and 3) are machined to form the desired contours (bock 444). Alternatively, the selection process can include the selection of a preformed piece or third member (block 440) that includes a finished portion, such as an end (e.g., the end 252 of FIGS. 2 and 3) with a flange (e.g., the flange 254 of FIGS. 2 and 3), so that machining of the finished portion is not required. One end (e.g., the end 258 of FIGS. 2 and 3) of the preformed third member is machined to form a contour (block 446) to enable the third member to be coupled to or to engage at least one of the pipe and the second member. After appropriate machining of the third member has been accomplished, the pipe and the second member assembly and the third member are placed in a holding device such as a fixture and coupled or joined together (block 448), for example, by welding as disclosed herein. Generally, machining of the third member can be completed before the third member is coupled to the pipe and second member assembly.

Example manufacturing methods are described with reference to the flowchart illustrated in FIG. 4. However, persons of ordinary skill in the art will readily appreciate that there are other ways to implement the methods of manufacturing fluid valve bodies, such as the use of CNC machinery, manual machining of the parts, and/or varying the order of the operations from the order depicted in FIG. 4.

Although certain example methods, apparatus, and articles of manufacture have been described herein, the scope of coverage of this patent is not limited thereto. On the contrary, this patent covers all methods, apparatus and articles of manufacture fairly falling within the scope of the appended claims.

## Claims

1. A method of making a fluid valve body for use in a sanitary fluid control system, the method comprising:
obtaining a length of pipe (210);
forming first (214) and second (216) ends of the length of pipe so that the first end is configured as an opening and the second end is configured to couple to a second member (220) of the fluid valve body, wherein the first end includes a flange;
forming the second member (220) to include a first end (224) having a flange, an opening having a first diameter (L) disposed through the first end, an enlarged area having a second diameter (M) extending from the opening, a port (240) to control fluid flow having a third diameter (N), and a second end (236) adjacent to the port having a contoured portion configured to couple to the second end of the length of pipe (210); and
coupling the second end (216) of the pipe (210) to the second end (236) of the second member (220) to form at least a portion of the fluid valve body.

2. A method as claimed in claim 1 further comprising:
forming the second member from a substantially solid object.

3. A method as claimed in claim 1, wherein the second end of the second member is coupled to the second end of the pipe before the second member is formed.

4. A method as claimed in claim 1 further comprising:
forming the second end of at least one of the pipe and second member to engage a third member of the fluid valve body;
forming the third member from a substantially solid object so that a first end of the third member is configured as an open end and a second end of the third member is configured to couple to the second end of the at least one of the pipe or the second member; and
coupling the second end of the third member to the second end of the at least one of the pipe or the second member.

5. A method as claimed in claim 4, wherein coupling the second end of the third member to the second end of at least one of the pipe or the second member comprises welding.

6. A method as claimed in claim 4, wherein at least one of the pipe, the second member, or the third member are made of metal.

7. A method as claimed in claim 1 further comprising:
forming the second member from a first part and a second part so that a first end of the first part is configured to engage the second part and a second end of the first part is the first end of the second member, the second part including the port, a first end configured to engage the first end of the first part, and a second end that is the second end of the second member; and
coupling together the first ends of the first and second parts.

8. A fluid valve body for use in a sanitary fluid control system, comprising
a length of pipe (210) having a first end (214) configured as an open end and a second end (216) coupled to a second member (220) of the fluid valve body, wherein the first end includes a flange,
the second member (220) comprising a first end (224) having a flange, an opening having a first diameter (L) disposed through the first end an enlarged area having a second diameter (M) extending from the opening, a port (240) to control fluid flow having a third diameter (N), and a second end (236) adjacent to the port having a contoured portion configured to couple to the second end of the length of pipe (220), wherein the second end (216) of the pipe and the second end (236) of the second member (220) are coupled together to form at least a portion of the fluid valve body.

9. A fluid valve body as claimed in claim 8, wherein the second end of the pipe and the second end of the second member are coupled via a weld.

10. A fluid valve body as claimed in claim 8, wherein the second end of the pipe is formed by at least one of drilling or cutting.

11. A fluid valve body as claimed in claim 8, wherein the second member is formed from a substantially solid object.

12. A fluid valve body as claimed in claim 11, wherein the second end of at least one of the pipe or the second member is coupled to a third member of the fluid valve body, wherein the third member is formed from a solid object so that a first end of the third member is configured as an open end and a second end of the third member is coupled to the second end of the at least one of the pipe or the second member.

13. A fluid valve body as claimed in claim 12, wherein the second end of the third member and the second end of the at least one of the pipe or the second member are coupled via a weld.

14. A fluid valve body as claimed in claim 12, wherein at least one of the pipe, the second member, or the third member are made of metal.

15. A fluid valve body as claimed in claim 8, wherein the second member further comprises first and second parts, wherein the first part includes a first end coupled to the second part and a second end that is the first end of the second member, and wherein a first end of the second part is coupled to the first end of the first part and a second end of the second part is the second end of the second member.

## Patentansprüche

1. Verfahren zum Herstellen eines Fluidventilkörpers zum Gebrauch in einem Sanitärfluidsteuerungssystem, wobei das Verfahren folgende Schritte aufweist:
Bereitstellen eines Rohrstücks (210);
Ausbilden eines ersten (214) und eines zweiten (216) Endes des Rohrstücks derart, dass das erste Ende als eine Öffnung ausgebildet ist und das zweite Ende ausgebildet ist, um mit einem zweiten Element (220) des Fluidventilkörpers zu verbinden, wobei das erste Ende einen Flansch aufweist;
Ausbilden des zweiten Elements (220) derart, dass es Folgendes aufweist: ein erstes Ende (224), das einen Flansch hat, eine Öffnung mit einem ersten Durchmesser (L) durch das erste Ende hindurch, einen vergrößerten Bereich mit einem zweiten Durchmesser (M), der sich von der Öffnung erstreckt, einen Anschluss (240) zur Steuerung des Fluiddurchflusses, der einen dritten Durchmesser (N) hat, und ein zweites Ende (236), das an einen Anschluss angrenzt und einen konturierten Bereich hat, der konfiguriert ist, um mit dem zweiten Ende des Rohrstücks (210) zu verbinden; und
Verbinden des zweiten Endes (216) des Rohrs (210) mit dem zweiten Ende (236) des zweiten Elements (220), um mindestens einen Teil des Fluidventilkörpers zu bilden.

2. Verfahren nach Anspruch 1, das ferner den folgenden Schritt aufweist:
Bilden des zweiten Elements aus einem im Wesentlichen massiven Gegenstand.

3. Verfahren nach Anspruch 1, wobei das zweite Ende des zweiten Elements mit dem zweiten Ende des Rohrs verbunden wird, bevor das zweite Element ausgebildet wird.

4. Verfahren nach Anspruch 1, das ferner folgende Schritte aufweist:
Ausbilden des zweiten Endes von dem Rohr und/oder dem zweiten Element, um mit einem dritten Element des Fluidventilkörpers in Eingriff zu gelangen;
Bilden des dritten Elements aus einem im Wesentlichen massiven Gegenstand derart, dass ein erstes Ende des dritten Elements als ein offenes Ende konfiguriert ist und ein zweites Ende des dritten Elements konfiguriert ist, um mit dem zweiten Ende des Rohrs und/oder des zweiten Elements verbunden zu werden; und
Verbinden des zweiten Endes des dritten Elements mit dem zweiten Ende des Rohrs und/oder des zweiten Elements.

5. Verfahren nach Anspruch 4, wobei das Verbinden des zweiten Endes des dritten Elements mit dem zweiten Ende des Rohrs und /oder des zweiten Elements einen Schweißvorgang aufweist.

6. Verfahren nach Anspruch 4, wobei das Rohr und/oder das zweite Element und/oder das dritte Element aus Metall besteht.

7. Verfahren nach Anspruch 1, das ferner folgende Schritte aufweist:
Bilden des zweiten Elements aus einem ersten Teil und einem zweiten Teil derart, dass ein erstes Ende des ersten Teils konfiguriert ist, um mit dem zweiten Teil in Eingriff zu gelangen, und ein zweites Ende des ersten Teils das erste Ende des zweiten Elements ist, wobei der zweite Teil aufweist:
die Anschlussöffnung, ein erstes Ende, das konfiguriert ist, um mit dem ersten Ende des ersten Teils in Eingriff zu gelangen, und ein zweites Ende, welches das zweite Ende des zweiten Elements ist; und
Verbinden der ersten Enden des ersten und des zweiten Teils miteinander.

8. Fluidventilkörper zur Verwenudng in einem Sanitärfluidsteuerungssystem Folgendes aufweisend:
ein Rohrstück (210), die ein erstes Ende (214), das als ein offenes Ende konfiguriert ist, und ein zweites Ende (216) hat, das mit einem zweiten Element (220) des Fluidventilkörpers verbunden ist, wobei das erste Ende einen Flansch aufweist,
wobei das zweite Element (220) aufweist: ein erstes Ende (224), das einen Flansch hat, eine Öffnung mit einem ersten Durchmesser (L) durch das erste Ende hindurch, einen vergrößerten Bereich mit einem zweiten Durchmesser (M), der von der Öffnung ausgeht, eine Anschlussöffnung (240) zur Steuerung des Fluiddurchflusses, die einen dritten Durchmesser (N) hat, und ein zweites Ende (236) angrenzend an die Anschlussöffnung, das einen konturierten Bereich hat, der konfiguriert ist, um mit dem zweiten Ende des Rohrstücks (210) verbunden zu werden, wobei das zweite Ende (216) des Rohrs und das zweite Ende (236) des zweiten Elements (220) miteinander verbunden sind, um mindestens einen Bereich des Fluidventilkörpers zu bilden.

9. Fluidventilkörper nach Anspruch 8, wobei das zweite Ende des Rohrs und das zweite Ende des zweiten Elements über eine Schweißverbindung miteinander verbunden sind.

10. Fluidventilkörper nach Anspruch 8, wobei das zweite Ende des Rohrs durch Bohren und/oder Schneiden gebildet ist.

11. Fluidventilkörper nach Anspruch 8, wobei das zweite Element aus einem im Wesentlichen massiven Gegenstand gebildet ist.

12. Fluidventilkörper nach Anspruch 11, wobei das zweite Ende des Rohrs und/oder des zweiten Elements mit einem dritten Element des Fluidventilkörpers verbunden ist, wobei das dritte Element aus einem massiven Gegenstand derart gebildet ist, dass ein erstes Ende des dritten Elements als ein offenes Ende konfiguriert ist und ein zweites Ende des dritten Elements mit dem zweiten Ende des Rohrs und/oder des zweiten Elements verbunden ist.

13. Fluidventilkörper nach Anspruch 12, wobei das zweite Ende des dritten Elements und das zweite Ende des Rohrs und/oder des zweiten Elements über eine Schweißverbindung verbunden sind.

14. Fluidventilkörper nach Anspruch 12, wobei das Rohr und/oder das zweite Element und/oder das dritte Element aus Metall besteht.

15. Fluidventilkörper nach Anspruch 8, wobei das zweite Element ferner einen ersten und einen zweiten Teil aufweist, wobei der erste Teil ein erstes Ende, das mit dem zweiten Teil verbunden ist, und ein zweites Ende aufweist, welches das erste Ende des zweiten Elements ist, und wobei ein erstes Ende des zweiten Teils mit dem ersten Ende des ersten Teils verbunden ist und ein zweites Ende des zweiten Teils das zweite Ende des zweiten Elements ist.

## Revendications

1. Procédé de fabrication d'un corps de vanne pour fluide destiné à être utilisé dans un système de commande de fluide sanitaire, le procédé comprenant les étapes consistant à :
obtenir une longueur de tuyau (210) ;
former des première (214) et seconde (216) extrémités de la longueur de tuyau afin que la première extrémité soit configurée en tant qu'ouverture, et que la seconde extrémité soit configurée pour un couplage à un deuxième élément (220) du corps de vanne pour fluide, dans lequel la première extrémité comprend une bride ;
former le deuxième élément (220) pour qu'il comporte une première extrémité (224) ayant une bride, une ouverture ayant un premier diamètre (L) disposée à travers la première extrémité, une zone élargie ayant un deuxième diamètre (M) s'étendant à partir de l'ouverture, un orifice (240) pour commander l'écoulement de fluide ayant un troisième diamètre (N), et une seconde extrémité (236) adjacente à l'orifice ayant une partie profilée configurée pour un couplage à la seconde extrémité de la longueur de tuyau (210) ; et
coupler la seconde extrémité (216) du tuyau (210) à la seconde extrémité (236) du deuxième élément (220) afin de former au moins une partie du corps de vanne pour fluide.

2. Procédé selon la revendication 1, comprenant en outre l'étape consistant à :
former le deuxième élément à partir d'un objet essentiellement solide.

3. Procédé selon la revendication 1, dans lequel la seconde extrémité du deuxième élément est couplée à la seconde extrémité du tuyau avant que le deuxième élément ne soit formé.

4. Procédé selon la revendication 1, comprenant en outre les étapes consistant à :
former la seconde extrémité d'au moins un élément parmi le tuyau et le deuxième élément pour une mise en prise avec un troisième élément du corps de vanne pour fluide ;
former le troisième élément à partir d'un objet essentiellement solide afin qu'une première extrémité du troisième élément soit configurée en tant qu'extrémité ouverte, et qu'une seconde extrémité du troisième élément soit configurée pour un couplage à la seconde extrémité d'au moins un élément parmi le tuyau ou le deuxième élément ; et
coupler la seconde extrémité du troisième élément à la seconde extrémité d'au moins un élément parmi le tuyau ou le deuxième élément.

5. Procédé selon la revendication 4, dans lequel le couplage de la seconde extrémité du troisième élément à la seconde extrémité du au moins un élément parmi le tuyau ou le deuxième élément comprend un soudage.

6. Procédé selon la revendication 4, dans lequel au moins un élément parmi le tuyau, le deuxième élément, ou le troisième élément est fabriqué en métal.

7. Procédé selon la revendication 1, comprenant en outre les étapes consistant à :
former le deuxième élément à partir d'une première partie et d'une seconde partie afin qu'une première extrémité de la première partie soit configurée pour venir en prise avec la seconde partie, et
qu'une seconde extrémité de la première partie soit la première extrémité du deuxième élément, la seconde partie comprenant l'orifice, une première extrémité configurée pour venir en prise avec la première extrémité de la première partie, et une seconde extrémité qui est la seconde extrémité du deuxième élément ; et
coupler ensemble les premières extrémités des première et seconde parties.

8. Corps de vanne pour fluide destiné à être utilisé dans un système de commande de fluide, comprenant :
une longueur de tuyau (210) derrière comportant une première extrémité (224) ayant une bride, une ouverture ayant un premier diamètre (L) disposée à travers la première extrémité, une zone élargie ayant un deuxième diamètre (M) s'étendant à partir de l'ouverture, un orifice (240) pour commander un écoulement de fluide ayant un troisième diamètre (N), et une seconde extrémité (236) adjacente à l'orifice ayant une partie profilée configurée pour un couplage à la seconde extrémité de la longueur du tuyau (220), la seconde extrémité (216) du tuyau et la seconde extrémité (236) du deuxième élément (220) étant couplées ensemble pour former au moins une partie du corps de vanne pour fluide.

9. Corps de vanne pour fluide selon la revendication 8, dans lequel la seconde extrémité du tuyau et la seconde extrémité du deuxième élément sont couplées par l'intermédiaire d'une soudure.

10. Corps de vanne pour fluide selon la revendication 8, dans lequel la seconde extrémité du tuyau est formée par au moins un forage ou une découpe.

11. Corps de vanne pour fluide selon la revendication 8, dans lequel la seconde extrémité est formée à partir d'un objet essentiellement solide.

12. Corps de vanne pour fluide selon la revendication 11, dans lequel la seconde extrémité du au moins un élément parmi le tuyau ou le deuxième élément est couplée à un troisième élément du corps de vanne pour fluide, dans lequel le troisième élément est formé à partir d'un objet solide afin qu'une première extrémité du troisième élément soit configurée en tant qu'extrémité ouverte, et qu'une seconde extrémité du troisième élément soit couplée à la seconde extrémité du au moins un élément parmi le tuyau ou le deuxième élément.

13. Corps de vanne pour fluide selon la revendication 12, dans lequel la seconde extrémité du troisième élément et la seconde extrémité du au moins un élément parmi le tuyau ou le deuxième élément sont couplées par l'intermédiaire d'une soudure.

14. Corps de vanne pour fluide selon la revendication 12, dans lequel au moins un du tuyau, du deuxième élément, ou du troisième élément sont fabriqués en métal.

15. Corps de vanne pour fluide selon la revendication 8, dans lequel la seconde extrémité comprend en outre des première et seconde parties, dans lequel la première partie comprend une première extrémité couplée à la seconde partie, et une seconde extrémité qui est la première extrémité du deuxième élément, et dans lequel la première extrémité de la seconde partie est couplée à la première extrémité de la première partie, et une seconde extrémité de la seconde partie est la seconde extrémité du deuxième élément.
